# EUROPÄISCHE PATENTSCHRIFT

(11) **EP 2 653 325 B1**
(45) Veröffentlichungstag und Bekanntmachung des Hinweises auf die Patenterteilung: **04.03.2015**
(21) Anmeldenummer: 13161260.8
(22) Anmeldetag: 27.03.2013
(51) Int. Cl.: B60C 27/00, B60C 27/08

(54) **Vorrichtung zum Anbinden des Laufnetzes einer Schneekette**
Device for fixing the mesh of a snow chain
Dispositif de liaison des chaînes de roulement d'une chaîne à neige

(30) Priorität: 16.04.2012 AT 4562012
(43) Veröffentlichungstag der Anmeldung: 23.10.2013
(73) Patentinhaber: Pewag Schneeketten GmbH & Co KG, 9371 Brückl (AT)
(72) Erfinder: Berghold, Johann, 8063 Höf-Präbach (AT); Nieß, Bernhard, 8312 Ottendorf (AT); Schober, Andreas, 8010 Graz (AT)
(74) Vertreter: Patentanwaltskanzlei Matschnig & Forsthuber OG

(56) Entgegenhaltungen:
- EP-A1- 2 163 408
- DE-A1- 10 348 636
- US-A- 1 424 347
- US-A- 5 280 816

## Beschreibung

Die Erfindung betrifft eine Verbindungsvorrichtung zum Verbinden eines Seitenstrangs einer Gleitschutzkette, insbesondere einer Schneekette, mit zumindest einem Anbindungsstrang zum Anbinden eines Laufnetzes der Gleitschutzkette an den Seitenstrang, wobei die Verbindungsvorrichtung einen durch sie verlaufenden Kanal zum Aufnehmen eines Abschnitts des Seitenstrangs sowie zumindest eine seitlich des Kanals angeordnete Öffnung aufweist, in welcher ein Anschlusselement, insbesondere Kettenglied, eines Anbindungsstrangs zumindest zum Teil einlegbar ist. Außerdem betrifft die Erfindung eine Gleitschutzkette der genannten Art.

Eine Verbindungsvorrichtung dieser Art ist beispielsweise aus EP 2 163 408 A1 der Anmelderin bekannt; darin ist eine Gleitschutzkette mit einem Laufnetz und Seitensträngen beschrieben, wobei auf die Ummantelung eines dehnbaren Spannstrangs Verbindungselemente aufgeklemmt sind, die Öffnungen aufweisen, in die jeweils ein Haken zum Halten eines Endgliedes eines Kettenstrangs des Laufnetzes oder direkt ein solches Endglied eingehängt ist. Insbesondere zeigt Fig. 15 dieser Druckschrift ein Verbindungselement, in dem das Endglied je eines Anbindungsstrangs von einer Schraube gehalten wird, die durch das Auge des Endglieds geführt ist. Verbindungselemente dieser Art können neben der Anbindungsfunktion zugleich als Felgenschutz für die Bereiche der Felge bzw. des Reifens dienen, im Vergleich zu herkömmlichen Elementen, wie Haken oder Klammern, die zum Anbinden des Laufnetzes an einen Seitenstrang dienen und das Risiko einer Beschädigung der Reifenflanke mit sich bringen. Es hat sich jedoch herausgestellt, dass die Bewegungsmöglichkeit des Endglieds in der Öffnung zu unerwünschtem Verschleiß der Verbindungsvorrichtung führen.

Eine andere Verbindungsvorrichtung geht aus EP 1 752 318 A1 hervor. Diese umfasst ein U-Element, das auf den Seitenstrang geklemmt wird, und ein Verbindungselement mit einer Öse, in die das Endglied einer Kette des Laufnetzes eingehängt wird; U-Element und Verbindungselement werden mithilfe eines Verbindungsstiftes miteinander verbunden. Diese Art der Anbindung des Laufnetzes an den Seitenstrang ist jedoch aufwändig und benötigt mehrere Arbeitsschritte der Montage, bei der mit einer Vielzahl verschiedener Komponenten hantiert werden muss. Eine weitere Verbindungseinrichtung ist in US 1,424,347 beschrieben. DE 103 48 636 A1 beschreibt eine als Felgenschutzelement dienende Verbindung zwischen Kettensträngen und einem Spannstrang.

Es ist daher eine Aufgabe der Erfindung, die genannten Nachteile des Stands der Technik zu überwinden und eine Verbindungsvorrichtung zu schaffen, die in einer Gleitschutzkette (Schneekette) eine zuverlässige und verschleißarme Anbindung eines Endgliedes eines Anbindungsstrangs an den Seitenstrang leisten kann. Zudem soll die Montage der Verbindungsvorrichtung und das damit verbundene Herstellen der Anbindung schnell und auf einfache Weise möglich sein, wobei möglichst wenige Komponenten gehandhabt werden müssen.

Diese Aufgabe wird ausgehend von einer Verbindungsvorrichtung der eingangs genannten Art dadurch gelöst, dass erfindungsgemäß die Öffnung (in die das Kettenglied bzw. Anschlusselement zumindest zum Teil einlegbar ist) eine U-Form aufweist, deren Innenseite von einem mit der Verbindungsvorrichtung einstückig ausgebildeten Zapfen gebildet wird.

Diese Lösung erfüllt die gestellte Aufgabe auf überraschend effiziente Weise. Der Erfindung liegt der Gedanke zugrunde, dass die Verbindungsvorrichtung einen Zapfen aufweist, der einstückig mit der Vorrichtung ist und somit nicht extra eingesetzt werden muss; zudem ist der Zapfen derart gestaltet, dass er (wenn ein Anschlusselement eingelegt ist) in ein Auge des Anschlusselements eingreift und somit das Anschlusselement in seiner Position hält. Dadurch ergibt sich ein verbesserter Halt des Anschlusselements in der Verbindungsvorrichtung, das ein besseres Abstützen des Anschlusselements ermöglicht, was wiederum vorzeitigen Verschleiß vermeidet. Zudem ermöglicht bzw. vereinfacht die Erfindung die Bereitstellung von Verbindungsvorrichtungen als Ersatzteil, wenn diese z.B. infolge einer Beschädigung ausgetauscht werden müssen. Es sei angemerkt, dass die Verbindungsvorrichtung einstückig oder aus mehreren Teilen gebildet sein kann.

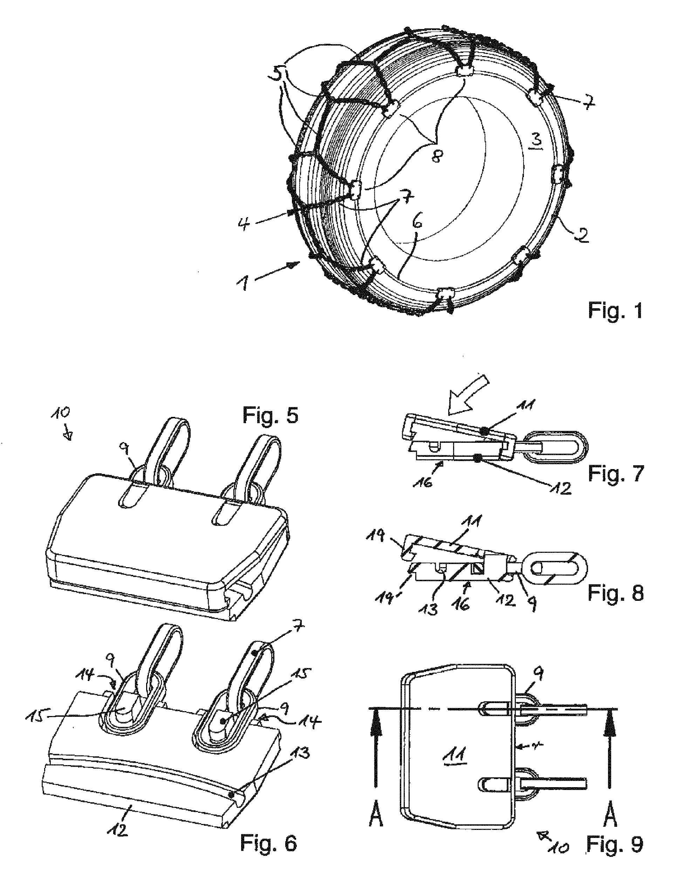

Im Rahmen dieser Offenbarung bedeutet Laufnetz die Gesamtheit jener Teile einer Gleitschutzkette, die im montierten Zustand auf der Lauffläche des Reifens, auf den die Gleitschutzkette aufgezogen ist, zu liegen kommt. Zumeist ist das Laufnetz aus Kettensträngen gebildet, die ein netzähnliches Gebilde realisieren (Kettennetz). Daneben können gegebenenfalls weitere Komponenten wie Leisten oder Krallen vorhanden sein. Die Seitenstränge dagegen werden auf den Reifenflanken (Felgen) positioniert; sie definieren die seitlichen Ränder der Gleitschutzkette. Anbindungsstränge dienen der Verbindung zwischen den Seitensträngen und dem Laufnetz. Die Anbindungsstränge dienen zusammen mit den Seitensträngen dazu, das Laufnetz über die Lauffläche zu spannen und dort in einer vorgesehenen Geometrie zu halten. In vielen Fällen ist der Anbindungsstrang ein Kettenstrang, der eine Verlängerung eines Stranges des Laufnetzes darstellt (vgl. Fig. 1). Das Anschlusselement des Anbindungsstrangs ist hierbei in der Regel ein Kettenglied, das gleichartig wie die übrigen Kettenglieder des Anbindungsstrangs gestaltet ist. Jedoch kann in einer Variante das Anschlusselement ein verstärktes Kettenglied oder ein Ring sein, wobei der Zapfen der Verbindungsvorrichtung durch das Auge dieses Rings/Gliedes greift, oder ein Haken, der in ein letztes Glied oder eine Endöse des Anbindungstrang eingehängt wird und der einen gebogenen Abschnitt aufweist, der in die Öffnung der Verbindungsvorrichtung eingelegt wird. Der Anbindungsstrang kann in einer Variante auch ein Seilabschnitt sein, der an seinem Ende ein Kettenglied oder einen Endring trägt oder zu einer Endschlaufe geschlossen ist und so das Anschlusselement verwirklichen.

In einer vorteilhaften Weiterbildung der Erfindung kann die U-förmige Öffnung eine der Form des darin einzulegenden Anschlusselements entsprechende Formgebung aufweisen, die ein seitliches Kippen des Anschlusselements in der Öffnung unterbindet.

Gemäß einem vorteilhaften Aspekt der Erfindung umfasst die Verbindungsvorrichtung einen ersten und einen zweiten Schalenteil (insbesondere ein Unterteil bzw. ein Oberteil); dabei ist bevorzugt die zumindest eine U-förmige Öffnung in dem ersten Schalenteil ausgebildet, und der Zapfen ist mit dem ersten Schalenteil einstückig. Hierbei können die beiden Schalenteile voneinander getrennte Bauteile sein, die erst bei der Montage zusammengefügt werden. Auch können sie durch einen Verschlussmechanismus zum Herstellen einer Formschlussverbindung miteinander verbindbar sein. Dabei kann der Verschlussmechanismus zum Ausbilden einer unlösbaren (d.h. nicht ohne Beschädigung auflösbaren) Formschlussverbindung, vorzugsweise Schnapp- oder Rastverbindung, ausgelegt sein. Der Kanal, der für das Einlegen des Seitenstrangs in dem ersten Schalenteil ausgelegt ist, kann nur in dem ersten Schalenteil vorgesehen sein, wogegen der zweiten Schalenteil an dieser Stelle frei von einer Ausnehmung ist.

In einer weiteren Ausgestaltung, bei der der Seitenstrang insbesondere als Seil oder Federstrang ausgebildet ist, ist es zweckmäßig, wenn der Kanal einen im Wesentlichen gleich bleibenden Querschnitt aufweist.

Außerdem kann die Verbindungsvorrichtung eine ebene Auflagefläche aufweisen, die im montierten Zustand dem Reifen zugewandt ist, wobei die Seitenfläche vorzugsweise abgerundete Randkanten aufweist.

Die oben gestellte Aufgabe wird ebenso von einer Gleitschutzkette, insbesondere Schneekette, gelöst, mit einem Laufnetz und zumindest einem in einem montierten Zustand an einer Reifenseite befindlichen Seitenstrang, mit welchem das Laufnetz mittels einer Anzahl von Anbindungssträngen verbunden ist, wobei auf dem Seitenstrang Verbindungsvorrichtungen gemäß der Erfindung angeordnet sind, in welche jeweils ein oder mehrere Anbindungsstränge wie hier beschrieben eingehängt sind.

Die Erfindung samt weiteren Vorzügen und Ausgestaltungen wird im Folgenden anhand nicht einschränkender Ausführungsbeispiele näher erläutert, die in den beigefügten Zeichnungen dargestellt sind. Die Zeichnungen zeigen:
- Fig. 1: eine Gleitschutzkette, die auf einen PKW-Reifen aufgezogen ist und die erfindungsgemäße Verbindungsvorrichtungen beinhaltet;
- Fig. 2: eine Verbindungsvorrichtung gemäß einem ersten Ausführungsbeispiel;
- Fig. 3a-3d: zeigen das Unterteil der Verbindungsvorrichtung der Fig. 2 in einer Aufsicht, einer Ansicht der Rückenfläche einer Seitenansicht, bzw. einer perspektivischen Ansicht;
- Fig. 4a-4d: zeigen das Unterteil der Verbindungsvorrichtung der Fig. 2 in einer Ansicht der Innenseite, einer Ansicht der Rückenfläche einer Seitenansicht, bzw. einer perspektivischen Ansicht;
- Fig. 5: die Verbindungsvorrichtung der Fig. 2, in geöffnetem Zustand unmittelbar vor dem Schließen;
- Fig. 6: die Verbindungsvorrichtung der Fig. 2 mit abgenommenem Oberteil;
- Fig. 7: die Verbindungsvorrichtung in geöffnetem Zustand wie in Fig. 5 in einer Seitenansicht;
- Fig. 8: die Verbindungsvorrichtung der Fig. 5 und 7 in einer Schnittansicht analog zur Ansicht der Fig. 7 entlang der Schnittlinie A-A in Fig. 9;
- Fig. 9: eine Aufsichtsansicht der Verbindungsvorrichtung der Fig. 5 und 7;
- Fig. 10: eine Verbindungsvorrichtung gemäß einem zweiten Ausführungsbeispiel;
- Fig. 11a-11d: zeigen das Unterteil der Verbindungsvorrichtung der Fig. 10 in einer Aufsicht, einer Ansicht der Rückenfläche einer Seitenansicht, bzw. einer perspektivischen Ansicht;
- Fig. 12a-12d: zeigen das Unterteil der Verbindungsvorrichtung der Fig. 10 in einer Ansicht der Innenseite, einer Ansicht der Rückenfläche einer Seitenansicht, bzw. einer perspektivischen Ansicht;
- Fig. 13: eine Verbindungsvorrichtung der Fig. 10, in geöffnetem Zustand unmittelbar vor dem Schließen;
- Fig. 14: die Verbindungsvorrichtung der Fig. 10 mit abgenommenem Oberteil;
- Fig. 15: die Verbindungsvorrichtung in geöffnetem Zustand wie in Fig. 13 in einer Seitenansicht;
- Fig. 16: die Verbindungsvorrichtung der Fig.13 und 15 in einer Schnittansicht analog zur Ansicht der Fig. 15 entlang der Schnittlinie B-B in Fig. 17;
- Fig. 17: eine Aufsichtsansicht der Verbindungsvorrichtung der Fig. 13 und 15.

In Fig. 1 ist eine typische Auslegung einer Gleitschutzkette gezeigt, in der die Erfindung zur Anwendung kommt. Gezeigt ist in beispielhafter Weise eine Schneekette 1 für einen PKW-Reifen 2, in einer Ansicht auf die Innenseite 3 des Reifens 2. Die Schneekette 1 umfasst ein Laufnetz 4, das aus mehreren Kettensträngen - als Spurkreuze 5 bezeichnet - gebildet ist, und einen in dem montierten Zustand der Reifeninnenseite 3 anliegenden inneren Seitenstrang 6 auf. Die Verbindung zwischen Seitenstrang 6 und Laufnetz 4 erfolgt durch eine Anzahl von Anbindungssträngen 7, deren Enden mittels Verbindungsvorrichtungen 8 - im gezeigten Beispiel je zwei Enden an einer Vorrichtung 8 - an dem Seitenstrang angebunden sind. Die in Fig. 1 gezeigte Geometrie des Laufnetzes ist lediglich beispielhafter Art, und es kann je nach Ausführungsform eine beliebige andere Laufnetzgeometrie verwendet werden.

Der Seitenstrang 6 ist typischer Weise als Seil ausgeführt, das gegebenenfalls zusätzlich eine Ummantelung aufweisen kann. In entsprechender Weise kann auf der Reifenaußenseite (nicht gezeigt) ein äußerer Seitenstrang mit Anbindungen des Laufnetzes über Anbindungsstränge vorgesehen sein.

Im Folgenden werden zwei beispielhafte Ausführungsformen für die Verbindungsvorrichtungen 8 vorgestellt.

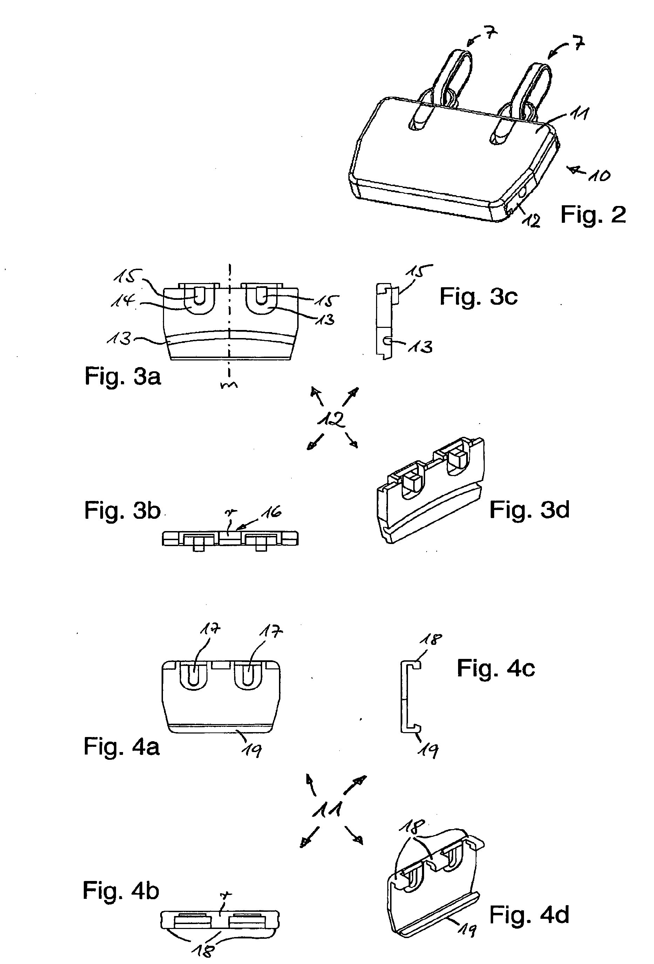

Fig. 2 zeigt eine Verbindungsvorrichtung 10 gemäß einem ersten Ausführungsbeispiel der Erfindung.

Die Vorrichtung 10 wird aus einem Oberteil 11 und einem Unterteil 12 gebildet, die vorzugsweise voneinander gesonderte Komponenten sind, die bei der Montage zusammengefügt werden. Fig. 3a bis 3d zeigen das Unterteil 12 in verschiedenen Ansichten, und Fig. 4a bis 4d zeigen das Oberteil in verschiedenen Ansichten. In den Fig. 3a, 3d, 4a und 4d sind insbesondere die nach innen weisenden Formflächen der Teile 11, 12 ersichtlich.

Wie besonders anhand Fig. 3a und 3d ersichtlich ist, ist in dem Unterteil 12 der Vorrichtung 10 ein Kanal 13 ausgebildet, der als Aufnahme für den Seitenstrang 6 vorgesehen ist. Der Kanal 13 weist einen im Wesentlichen gleichbleibenden Querschnitt (gemessen senkrecht zur jeweiligen Verlaufsrichtung) auf, wobei der Querschnitt so gewählt ist, dass der darin geführte Abschnitt des Seitenstrangs sich durch den Kanal bewegen kann. Hierbei kann vorgesehen sein, dass die Position von der aus Kunststoff bestehenden Ummantelung des Innenstranges (Seiles) fixiert wird. In einer Variante kann der darin gehaltene Abschnitt des Seitenstrangs durch Klemmung gehalten sein, sodass die einmal am Seitenstrang montierte Vorrichtung 10 dort eine feste Position einnimmt. Der Kanal 13 weist vorzugsweise einen gebogenen Verlauf auf, der der Krümmung des Seitenstrangs entlang der Reifeninnenseite 3 im montierten Zustand entspricht.

Bezugnehmend auf Fig. 5 bis 9 verwirklicht die Verbindungsvorrichtung 10 eine Anbindung für zwei Anbindungsstränge 7. Hierzu weist das Unterteil 12 zwei U-förmige Öffnungen 14 auf, wobei jede Öffnung 14 einen Aufnahmezapfen 15 aufweist, auch kurz Zapfen genannt, der säulenartig in der Mitte der betreffenden Öffnung 14 angeordnet ist. Wie in Fig. 6 erkennbar ist, wird in jede Öffnung 14 wird ein Endglied 9 eines Anbindungsstrangs 7 der Schneekette eingelegt; das Endglied 9 entspricht hierbei dem Anschlusselement gemäß der Erfindung. Durch den Zapfen 15 wird das Endglied in seiner Position in der Öffnung 14 gehalten. Die U-Form der Öffnung 14, insbesondere ihr Außenrand, ist vorteilhafter Weise so gestaltet, dass sie der Form des darin einzulegenden Anschlusselements 9 entspricht. Dies trägt dazu bei ein seitliches Kippen des Anschlusselements in der Öffnung zu unterbinden und an dem Ende des Anbindungsstrangs 7 auftretende seitliche Kräfte auf effektive Weise aufzufangen. Die Formgebung des Zapfens 15 kann ebenfalls so gewählt sein, dass dieser zur Aufnahme seitlicher Kräfte beiträgt. Jedoch ist der Zapfen 15 in erste Line dazu vorgesehen, das Element 9 gegen Zugkräfte, die entlang des Anbindungsstrangs wirken, in seiner Position in der Öffnung zu halten. Die Orientierung der U-Form in der Verbindungsvorrichtung 10 entspricht einer geraden Anbindung, d.h. die Mittelachse der in den Öffnungen 14 gehaltenen Endglieder 9 ist parallel zur Mittelachse m (Fig. 3a) der Verbindungsvorrichtung 10.

Die Formgebung der beiden Teile 11, 12 - und hier insbesondere die Formgebung der Öffnungen 14 und der Zapfen 15 - ist so ausgelegt, dass beide Teile mit einem Spritzgussverfahren gefertigt werden können.

Das Unterteil 12 weist eine ebene Auflagefläche 16 auf, die frei von Kanten oder Vorsprüngen ist, die die Reifenflanke beschädigen könnten; die ebene Gestaltung der Auflagefläche 16 ist in den Seitenansichten der Fig. 2c, 2d, 3b und 3d erkennbar. Zudem können die Kanten am Rand der Fläche 16 abgerundet sein. Gegenüber herkömmlichen Anbindungen aus Metall hat dies den Vorteil, dass sie vor allem durch die Verwendung von Kunststoff und/oder der Oberfläche ohne scharfe Kanten zur Vermeidung von Kratzern auf den Felgen beitragen. Bisher wurde solch ein Felgenschutz meist durch zusätzliche aufsteckbare oder anders zu montierende Teile realisiert.

Bezugnehmend auf Fig. 4a-4d sind in dem Oberteil 11 Öffnungen 17 vorgesehen, die jeweils den Zapfen 15 des Unterteils 12 entsprechen und in die die Zapfen eingreifen. Die Zapfen 15 werden somit in den Öffnungen 17 gehalten, was wiederum die Stabilität der Zapfen 15 gegenüber durch den Anbindungsstrang eingeleiteten Kräften erhöht.

Das Oberteil 11 der Vorrichtung 10 bildet bei der Montage eine Schnappverbindung mit dem Unterteil 12 aus, wodurch eine vorzugsweise unlösbare Verbindung zustande kommt, in der die Endglieder 9 gehalten werden. Hierzu sind an dem Oberteil Vorsprünge 18 sowie eine Lippe 19 vorgesehen. Die Vorsprünge 18 befinden sich an der Rückenfläche r (d.i. die den Gliedern zugewandte schmale Seite der Vorrichtung; vgl. Fig. 4b und 9) des Oberteils und umgreifen den Rand des Unterteils 11 zwischen und außerhalb der Öffnungen 13. Mithilfe der Vorsprünge 18 kann das Oberteil am Unterteil in angewinkelter Stellung wie anhand Fig. 7 und 8 ersichtlich eingehängt werden. Mit einer Kippbewegung entsprechend dem Pfeil in Fig. 7 kann das Oberteil 11 auf das Unterteil 12 gedrückt werden, wodurch die gegenüber der Rückenfläche angeordnete, als federnder Schnapper wirkende Lippe 19 mit einer korrespondierenden Ausformung 19' am Rand des Unterteils 12 einrastet und eine vorzugsweise nicht lösbare Verbindung bildet.

Für die Montage der Verbindungsvorrichtung 10 gemäß der Erfindung werden in das Unterteil 11 die anzubindenden Komponente eingelegt, nämlich ein Abschnitt des Seitenstranges 6 in den Kanal 13 sowie in die Öffnungen 14 um die Zapfen 15 jeweils ein Endglied 9. Danach wird das Oberteil 11 zuerst an der Rückenfläche mithilfe der Vorsprünge 18 am Unterteil 12 eingehakt, und sodann an der gegenüberliegenden Seite an unten gedrückt wird, wodurch die Lippe 19 die Vorrichtung verschließt und eine dauerhafte Verbindung bildet (Fig. 2 zeigt die so erzielte geschlossene Vorrichtung).

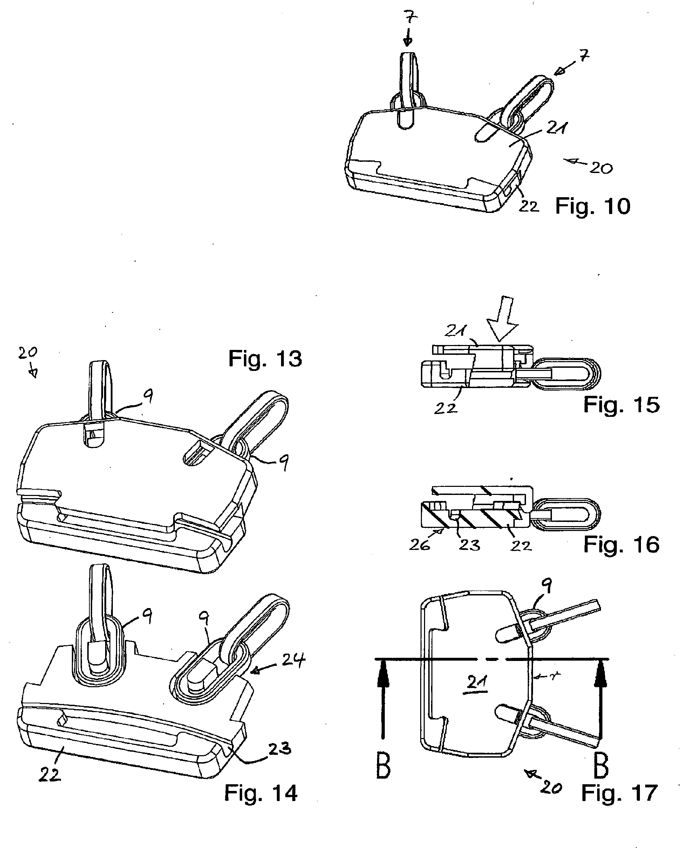

In einem zweiten Ausführungsbeispiel, das in Fig. 10 gezeigt ist, ist die Anbindung der Kettenglieder 9 in der Verbindungsvorrichtung 20 gegenüber der Mittelachse (entlang einer Radialrichtung des Reifens) geneigt, nach außen. Diese Ausrichtung in einem Winkel zur Mittelachse verbessert die Ableitung der auf die Kettenglieder ausgeübten Kräfte.

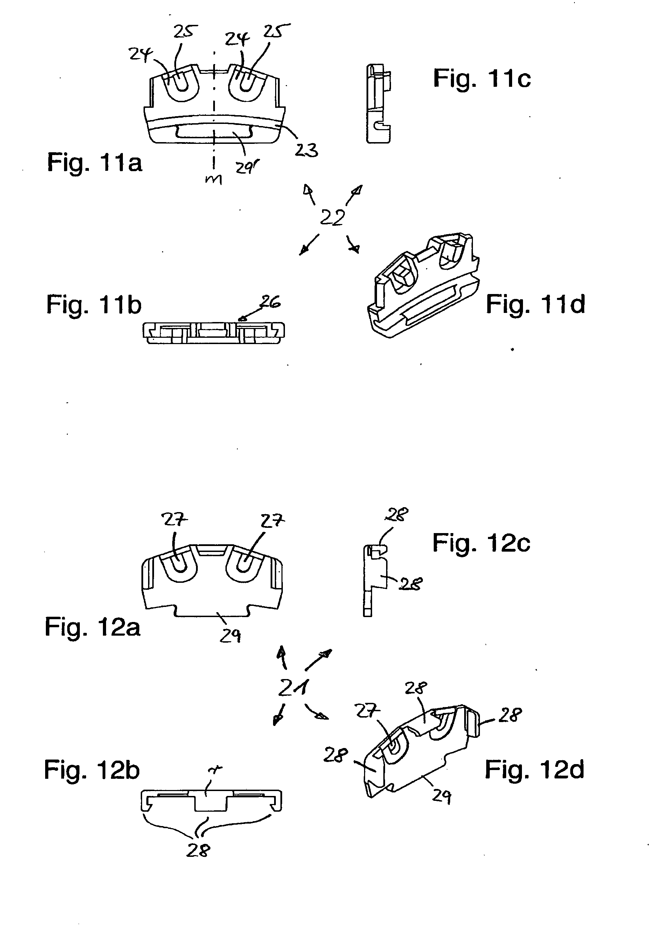

Die Vorrichtung 20 entspricht, sofern nicht nachfolgend anderes erläutert ist, der Vorrichtung 10 des ersten Ausführungsbeispiels. Ein Oberteil 21 und ein Unterteil 22 sind vorzugsweise voneinander gesonderte Komponenten, die bei der Montage zusammengefügt werden. Fig. 11a bis 11d zeigen das Unterteil 22 in verschiedenen Ansichten, und Fig.12a bis 12d zeigen das Oberteil in verschiedenen Ansichten. In den Fig. 11a, 11d, 12a und 12d sind insbesondere die nach innen weisenden Formflächen der Teile 21, 22 ersichtlich.

Bezugnehmend auf Fig. 13-17 ist ein Kanal 23 in dem Unterteil 22 als Aufnahme für den Seitenstrang 6 vorgesehen. Auch diese Ausführungsform 20 weist U-förmige Öffnungen 24 mit je einem Zapfen 25 auf, wobei das oben zur ersten Ausführungsform Gesagte in entsprechender Weise gilt. Das Unterteil 22 weist ebenfalls eine ebene Auflagefläche 26 auf. Bezugnehmend auf Fig. 12a-12d sind in dem Oberteil 21 Öffnungen 27 vorgesehen, die jeweils den Zapfen 25 des Unterteils 22 entsprechen, wie bereits weiter oben für Öffnungen 17 und Zapfen 15 beschrieben.

Das Oberteil 21 ist so gestaltet, dass bei der Montage eine Schnappverbindung mit dem Unterteil 22 entsteht und eine vorzugsweise unlösbare Verbindung zustande kommt, in der die Endglieder 9 gehalten werden. Das Oberteil 21 ist kürzer als das Unterteil 22 und weist an seinem Ende eine Zunge 29 auf, die einer Aufnahme 29' in dem Unterteil entspricht. Außerdem ist das Oberteil mit Vorsprüngen 28 ausgestatten, die zwischen den Gliedaufnahmen 24 (an der Rückenfläche r) und beiderseits angeformt sind. Diese Vorsprünge 28 umklammern das Unterteil 22 im montierten Zustand.

Die Montage der Verbindungsvorrichtung 20 erfolgt entsprechend jener der Vorrichtung 10, jedoch mit einer anderen Art der Bewegung, mit der der Verschluss des Oberteils of das Unterteil herbeigeführt wird, nämlich mit einer geraden Bewegung entsprechend dem Pfeil in Fig. 15. Durch diese Bewegung, bei der das Oberteil 21 auf das Unterteil 22 gedrückt wird, rastet die Zunge 19 in die Ausnehmung 29' des Unterteils 22 ein. Dies bildet zusammen mit den am Rand des Unterteils 22 einrastenden Vorsprüngen 28 des Oberteils 21 eine Verbindung vorzugsweise nicht lösbarer Art. (Fig. 10 zeigt die so erzielte geschlossene Vorrichtung 20.) Das Oberteil 21 wird somit gerade aufgesetzt und in schräger Richtung bewegt. Die schräge Fügerichtung ermöglicht es, auch den zumindest in das Oberteil 21 ragenden Teil der Zapfen 25 schräg ausführen zu können. Dies hat den Vorteil, dass bei Zugbelastung auf die Kettenglieder an den Aufnahmezapfen durch die schräge Kontaktfläche mit dem Oberteil eine Kraftausrichtung auftritt, die das Oberteil zusätzlich nach unten ziehen kann.

Selbstverständlich kann eine Verbindungsvorrichtung 20 mit geradliniger Verschlussbewegung in schräger Richtung auch mit anderen Winkeln der Anbindung oder mit gerader Anbindung (wie bei der Vorrichtung 10) ausgeführt werden. Umgekehrt kann bei einer Verbindungsvorrichtung 10 mit einem Verschluss durch Einwinkeln auch mit einer zur Mittelachse m gewinkelten Ausrichtung der Öffnungen 14 ausgeführt werden.

Auch wird angemerkt, dass die Erfindung nicht auf die gezeigten Ausführungsbeispiele beschränkt ist, sondern sich auf sämtliche Ausführungsformen bezieht, die in den Bereich der beigefügten Ansprüche fallen. So können Unter- und Oberteil voneinander verschiedene Bauteile sein oder bereits vor dem Verschließvorgang durch ein Gelenk miteinander verbunden sein. Auch kann z.B. in der Gleitschutzkette der Seitenstrang, auf den die erfindungsgemäße Verbindungsvorrichtung angebracht wird, anstelle eines Seiles ein federnder Strang, beispielsweise aus einer metallischen Spiralfeder mit einer Ummantelung, oder ein Kettenstrang sein. Im Falle einer Vorrichtung zur Befestigung an einem Kettenstrang als Seitenstrang können ein oder mehrere Kettenglieder aufgenommen werden, wobei der Kanal als der Form des bzw. der Kettengliedes/r gestaltete Tasche ausgeführt ist.

Je nach Zugrichtung der Kettenglieder kann die Orientierung der Aufnahme in der Öffnung verändert werden. Dies gestattet es, in Abhängigkeit von der jeweils verwendeten Geometrie des Laufnetzes und den dadurch bedingten Winkel der Orientierung des Anbindungsstranges gegenüber der Radialrichtung, Torsionskräfte zu verringern oder gänzlich zu verhindern, die durch schräge Belastung des aufgenommenen Gliedes auftreten können.

Als Material für die erfindungsgemäße Verbindungsvorrichtung kommen sowohl Kunststoffe als auch Metalle in Frage. Vorzugsweise kann das Unterteil aus faserverstärktem Kunststoff gefertigt sein. Entsprechend der bevorzugten Verwendung von Schnappverbindungen kann zumindest für das Oberteil günstiger Weise ein Kunststoff zur Verwendung, der in dem zum Einschnappen notwendigen Ausmaß elastisch deformierbar ist. Das Unterteil dagegen kann aus einem starren Material, wie z.B. Metall, oder ebenfalls aus - bevorzugt faserverstärktem - Kunststoff hergestellt werden, um höhere Festigkeiten zu erreichen. In einer Variante hierzu kann auch eine Verbindung der beiden Bauteilhälften durch Niete oder Schrauben erfolgen, allerdings ist ein einfacheres Assemblieren ist jedoch ohne diese zusätzlichen Teile durch die Klickverbindung gewährleistet.

## Patentansprüche

1. Verbindungsvorrichtung zum Verbinden eines Seitenstrangs (6) einer Gleitschutzkette (1) mit zumindest einem Anbindungsstrang (7) zum Anbinden eines Laufnetzes (4) der Gleitschutzkette an den Seitenstrang (6), wobei die Verbindungsvorrichtung (10, 20) einen durch sie verlaufenden Kanal (13, 23) zum Aufnehmen eines Abschnitts des Seitenstrangs (6) sowie zumindest eine seitlich des Kanals (13, 23) angeordnete Öffnung aufweist, in welcher ein Anschlusselement (9), insbesondere Kettenglied, eines Anbindungsstrangs zumindest zum Teil einlegbar ist, **dadurch gekennzeichnet, dass** die Öffnung (14, 24) eine U-Form aufweist, deren Innenseite von einem mit der Verbindungsvorrichtung (12, 22) einstückig ausgebildeten Zapfen (15, 25) gebildet wird, der säulenartig in der Mitte der betreffenden Öffnung (14, 24) angeordnet ist.

2. Verbindungsvorrichtung nach Anspruch 1, **dadurch gekennzeichnet, dass** die U-förmige Öffnung (14, 24) eine der Form des darin einzulegenden Anschlusselements (9) entsprechende Formgebung aufweist, die ein seitliches Kippen des Anschlusselements in der Öffnung unterbindet.

3. Verbindungsvorrichtung nach Anspruch 1 oder 2, **dadurch gekennzeichnet, dass** sie aus einem ersten (12, 22) und einem zweiten Schalenteil (11, 21) gebildet ist, wobei die zumindest eine U-förmige Öffnung (14, 24) in dem ersten Schalenteil (12, 22) ausgebildet ist und der Zapfen (15, 25) mit dem ersten Schalenteil (12, 22) einstückig ist.

4. Verbindungsvorrichtung nach Anspruch 3, **dadurch gekennzeichnet, dass** der erste Schalenteil (12, 22) und der zweite Schalenteil (11, 21) voneinander getrennte Bauteile sind, die durch einen Verschlussmechanismus (19, 19'; 28, 29, 29') zum Herstellen einer Formschlussverbindung miteinander verbindbar sind.

5. Verbindungsvorrichtung nach Anspruch 4, **dadurch gekennzeichnet, dass** der Verschlussmechanismus (28, 29, 29') zum Ausbilden einer unlösbaren Formschlussverbindung, vorzugsweise Schnapp- oder Rastverbindung, ausgelegt ist.

6. Verbindungsvorrichtung nach einem der Ansprüche 3 bis 5, **dadurch gekennzeichnet, dass** der Kanal (13, 23) für den Seitenstrang (6) in dem ersten Schalenteil (12, 22) vorgesehen ist.

7. Verbindungsvorrichtung nach einem der vorhergehenden Ansprüche, **dadurch gekennzeichnet, dass** der Kanal (13, 23) einen im Wesentlichen gleich bleibenden Querschnitt aufweist.

8. Verbindungsvorrichtung nach einem der vorhergehenden Ansprüche, **dadurch gekennzeichnet, dass** sie eine ebene Auflagefläche (16, 26) aufweist, die im montierten Zustand dem Reifen (3) zugewandt ist, wobei die Seitenfläche vorzugsweise abgerundete Randkanten aufweist.

9. Gleitschutzkette (1), insbesondere Schneekette, mit einem Laufnetz (4) und zumindest einem in einem montierten Zustand an einer Reifenseite (3) befindlichen Seitenstrang (6), mit welchem das Laufnetz (4) mittels einer Anzahl von Anbindungssträngen (7) verbunden ist, wobei auf dem Seitenstrang (6) Verbindungsvorrichtungen (10, 20) nach einem der vorangehenden Ansprüche angeordnet sind, in welche jeweils zumindest ein Anbindungsstrang (7) eingehängt ist.

## Claims

1. A connection device for connecting a side strand (6) of an anti-skid chain (1) having at least one attachment strand (7) for attaching a chain mesh (4) of the anti-skid chain to the side strand (6), wherein the connection device (10, 20) has a channel (13, 23) running therethrough in order to receive a portion of the side strand (6) and also has at least one opening arranged to the side of the channel (13, 23), into which opening a connector element (9), in particular a chain link, of an attachment strand can be inserted, at least in part, **characterised in that** the opening (14, 24) has a U-shape, of which the inner side is formed by a pin (15, 25), which is formed in one piece with the connection device (12, 22) and which is arranged in the middle of the opening (14, 24) in question.

2. The connection device according to Claim 1, **characterised in that** the U-shaped opening (14, 24) has a shaping which corresponds to the shape of the connector element (9) to be inserted therein and which prevents a lateral tilting of the connector element in the opening.

3. The connection device according to Claim 1 or 2, **characterised in that** it is formed of a first (12, 22) and a second shell part (11, 21), wherein the at least one U-shaped opening (14, 24) is formed in the first shell part (12, 22) and the pin (15, 25) is formed in one piece with the first shell part (12, 22).

4. The connection device according to Claim 3, **characterised in that** the first shell part (12, 22) and the second shell part (11, 21) are components formed separately from one another, which can be interconnected by a closure mechanism (19, 19'; 28, 29, 29') in order to produce a form-fit connection.

5. The connection device according to Claim 4, **characterised in that** the closure mechanism (28, 29, 29') is designed to form an undetachable form-fit connection, preferably a snap-fit or latched connection.

6. The connection device according to one of Claims 3 to 5, **characterised in that** the channel (13, 23) for the side strand (6) is provided in the first shell part (12, 22).

7. The connection device according to one of the preceding claims, **characterised in that** the channel (13, 23) has a substantially constant cross section.

8. The connection device according to one of the preceding claims, **characterised in that** it has a flat support surface (16, 26), which in the mounted state faces the tyre (3), wherein the side face preferably has rounded edges.

9. An anti-skid chain (1), in particular a snow chain, having a chain mesh (4) and at least one side strand (6), which in a mounted state is located on a tyre sidewall (3) and to which the chain mesh (4) is connected by means of a number of attachment strands (7), wherein connection devices (10, 20) according to one of the preceding claims are arranged on the side strand (6) and at least one attachment strand (7) is hooked into each of said connection devices.

## Revendications

1. Dispositif de raccordement, pour le raccordement d'un cerclage latéral (6) d'une chaîne antidérapante (1) avec au moins un brin de liaison (7) permettant de relier un maillage de roulement (4) de la chaîne antidérapante au cerclage latéral (6), ledit dispositif de raccordement (10, 20) présentant un canal (13, 23) le traversant pour la réception d'un tronçon du cerclage latéral (6), ainsi qu'au moins une ouverture disposée latéralement au canal (13, 23), où est peut être mis en place au moins partiellement un élément de connexion (9), en particulier un maillon de chaîne, d'un brin de liaison, **caractérisé en ce que** l'ouverture (14, 24) a une forme en U dont l'intérieur est occupé par un tenon (15, 25) formé d'un seul tenant avec le dispositif de raccordement (12, 22) et qui est disposé à la manière d'une colonne au centre de l'ouverture (14, 24) en question.

2. Dispositif de raccordement selon la revendication 1, **caractérisé en ce que** l'ouverture en U (14, 24) a une forme correspondant à la forme de l'élément de connexions (9) à y mettre en place, laquelle empêche un pivotement latéral de l'élément de connexion dans l'ouverture.

3. Dispositif de raccordement selon la revendication 1 ou 2, **caractérisé en ce qu'**il se compose d'une première (12, 22) et d'une deuxième (11, 21) parties de coque, la ou les ouvertures en U (14, 24) étant formées dans la première partie de coque (12, 22) et le tenon (15, 25) étant formé d'un seul tenant avec la première partie de coque (12, 22).

4. Dispositif de raccordement selon la revendication 3, **caractérisé en ce que** la première (12, 22) et la deuxième (11, 21) parties de coque sont des pièces séparées l'une de l'autre, qui peuvent être assemblées par un mécanisme de fermeture (19, 19' ; 28, 29, 29') pour réaliser un assemblage par complémentarité de forme.

5. Dispositif de raccordement selon la revendication 4, **caractérisé en ce que** le mécanisme de fermeture (28, 29, 29') est prévu pour réaliser un assemblage inamovible par complémentarité de forme, de préférence à encliquetage ou enclenchement.

6. Dispositif de raccordement selon l'une des revendications 3 à 5, **caractérisé en ce que** le canal (13, 23) pour le cerclage latéral (6) est prévu dans la première partie de coque (12, 22).

7. Dispositif de raccordement selon l'une des revendications précédentes, **caractérisé en ce que** le canal (13, 23) a une section transversale sensiblement constante.

8. Dispositif de raccordement selon l'une des revendications précédentes, **caractérisé en ce qu'**il présente une surface de pose plane (16, 26) opposée au pneu (3) en état de montage, la surface latérale présentant des bords préférentiellement arrondis.

9. Chaîne antidérapante (1), en particulier chaîne à neige, avec un maillage de roulement (4) et au moins un cerclage latéral (6) disposé contre un flanc de pneu (3) en état de montage, auquel le maillage de roulement (4) est raccordé par une pluralité de brins de liaison (7), des dispositifs de raccordement (10, 20) selon l'une des revendications précédentes, dans chacun desquels au moins un brin de liaison (7) est accroché, étant disposés sur le cerclage latéral (6).
